# EUROPÄISCHE PATENTSCHRIFT

(11) **EP 0 981 759 B1**
(45) Veröffentlichungstag und Bekanntmachung des Hinweises auf die Patenterteilung: **10.07.2002**
(21) Anmeldenummer: 98928251.2
(22) Anmeldetag: 13.05.1998
(51) Int. Cl.: G01R 31/38

(54) **MESSANORDNUNG ZUR ELEKTRISCH ENTKOPPELTEN FUNKTIONSÜBERPRÜFUNG VON IM BETRIEB BEFINDLICHEN SYSTEMEN**
MEASURING DEVICE FOR ELECTRICALLY DECOUPLED FUNCTION TESTING OF WORKING SYSTEMS
DISPOSITIF DE MESURE POUR LE CONTROLE ELECTRIQUEMENT DECOUPLE DU FONCTIONNEMENT DE SYSTEMES EN MARCHE

(30) Priorität: 15.05.1997 DE 19720379; 23.01.1998 DE 19802487
(43) Veröffentlichungstag der Anmeldung: 01.03.2000
(60) Teilanmeldung: 01101921.3
(73) Patentinhaber: DaimlerChrysler AG, 70567 Stuttgart (DE)
(72) Erfinder: BRÖHAN, Dirk, D-71332 Waiblingen (DE); WELTER, Lothar, D-73760 Ostfildern (DE); SCHENK, Jürgen, D-73095 Albershausen (DE)
(86) Internationale Anmeldenummer: EP9802794
(87) Internationale Veröffentlichungsnummer: WO9852062

(56) Entgegenhaltungen:
- EP-A- 0 715 160
- GB-A- 2 028 504
- US-A- 4 090 125

## Beschreibung

Die Erfindung betrifft eine Messanordnung zur Funktionsüberprüfung von im Betrieb befindlichen Systemen gemäß dem Oberbegriff des Anspruches 1.

Zur elektrisch entkoppelten Klangqualitätsüberprüfung von Lautsprechern ist bereits eine Messanordnung bekannt (DE-Buch: H. Sahm: HiFi-Lauptsprecher, 3.Auflage, Franzis-Verlag, München, 1985, Kapitel 29: Lautsprechermessungen), bei der die dem an die elektrische Versorgung angeschlossenen Lautsprecher zugehörige Schwingspule einen stromdurchflossenen Leiter bildet, dem als Aufnehmer ein Mikrofon zugeordnet ist, das als mechanisch-elektrischer Wandler die von der Schwingspule verursachten Schwingungen als Signale erfasst, die über einen Verstärker einer Auswerteeinheit, wie einem Frequenzanalysator, einem Pegelschreiber oder dergleichen zugeführt werden.

Ferner ist eine Vorrichtung (DE 43 08 796 C2) zur Überwachung und Diagnose mechanischer Systeme, so zum Beispiel zur Schadensdiagnose bei Maschinen bekannt, bei der Bauteile der Maschinen, wie etwa Wälzlager, auf mechanische Fehler, wie Lagerunregelmäßigkeiten oder Lagerschäden, überwacht und dadurch bedingte Schwingungen über einen am oder in der Nähe des Bauteiles angeordneten, industriegebräuchlichen Klopfsensor aufgenommen und weiterverarbeitet werden. Ausgangspunkt sind dabei stets durch mechanische, fehlerbedingte Gegebenheiten ausgelöste Schwingungen, die erfasst und durch Auswertung der Hüllkurve bewertet werden. Es werden also periodische Signale ausgewertet.

Desweiteren ist aus der GB 2 028 504 A eine Messvorrichtung der eingangs genannten Art zur zerstörungsfreien Prüfung von Spulen bei deren Herstellung, sowie auch gebrauchter Spulen im Hinblick auf ihre weitere Betriebssicherheit bekannt. Bei dieser Lösung wird über die jeweilige Spule ein vorgegebener Strom geschickt und es wird die Spule auf plötzliche Änderungen der mechanischen Kräfte beobachtet, die durch nicht lineare Schwingungen oder vibrationsbedingte Berührungen ausgelöst sind, so dass mechanische Fehler in der Spulenbefestigung wie auch in der Fixierung der die Spule bildenden Leiter zueinander durch einen Beschleunigungssensor erfasst werden können. Als Beschleunigungssensor ist ein mechanisch-elektrischer Wandler in Form eines Piezoelementes eingesetzt.

Zur potentialfreien Überwachung der Zündsysteme von Brennkraftmaschinen sind ferner kapazitiv oder induktiv arbeitende Messsysteme aus der US 4 090 125 bekannt. Dabei sind Zündkerze und Zündspule zu einer Einheit zusammengefasst und ist in der Zündspule, berührungsfrei zu deren Sekundärwindung liegend, ein elektrischer Leiter als Sensor vorgesehen, der mit der Messeinrichtung verbunden ist. Funktionell entsprechende Systeme sind aus der Praxis bekannt und arbeiten stromproportional (induktive Messaufnehmer) oder spannungsproportional (kapazitive Messaufnehmer), und sowohl bei den stromproportional arbeitenden induktiven wie auch bei den spannungsproportional arbeitenden kapazitiven Messaufnehmern sind Phasenverschiebungen gegeben. Kapazitive Messaufnehmer (Hochpass) erfassen zudem tiefe und induktive Messaufnehmer (Tiefpass) hohe Frequenzen nicht, so dass die erreichbaren Ergebnisse auch keine Aussage über die Wirkleistung zulassen.

Die Erfindung hat die Überwachung und Diagnose von stromdurchflossene Leiter umfassenden Systemen zum Ziel, und zwar einschließlich der Erfassung einmaliger, periodischer oder nichtperiodischer Ereignisse und der Gewinnung einmaliger, periodischer oder nichtperiodischer Steuer- oder Regelgrößen für das jeweilige System als solches, oder für das System und die diesem zugehörige Brennkraftmaschine.

Erreicht wird dies durch die Merkmale des Anspruches 1.

Durch die Erfindung wird sowohl für einen elektrischen Leiter umfassende Systeme von Brennkraftmaschinen wie auch für mit solchen Systemen ausgerüstete und/oder zusammenwirkende Brennkraftmaschinen eine elektrisch entkoppelte, also galvanisch getrennte Erfassung von Signalen zur Überwachung, Diagnose, Steuerung und Regelung ermöglicht, wobei über den gesamten Frequenzbereich, d.h. auch für sehr hohe Frequenzen die Signalerfassung wirkleistungsproportional und ohne Phasenverschiebung erfolgt. Über den mechanisch-elektrischen Wandler werden die Schwingungen des elektrischen Leiters potentialfrei im gesamten Arbeitsbereich erfasst, wobei die gewonnenen Signale zur über den elektrischen Leiter geführten elektrischen Leistung proportional sind. Da die Korrelation zeit- und phasenmäßig identisch und amplitudenmäßig proportional ist, ist auch der über die Schwingungen erfasste mechanische Energieverlauf mit der über den elektrischen Leiter laufenden elektrischen Leistung vergleichbar. Die Erfassung der elektrischen Leistung erlaubt die Beurteilung des Systems und Rückschlüsse sowohl auf primäre wie auch sekundäre Funktionen desselben. Ferner erlaubt die erfindungsgemäße Messanordnung Vergleiche zwischen mehreren Leitern eines Systemes untereinander, so dass Systeme insgesamt überwacht werden können, und dies sowohl hinsichtlich baulicher Merkmale, wie Kontaktierungen und Verbindungsmittel als auch hinsichtlich ihrer funktionalen Abläufe.

Aufgrund dieser Eigenschaften, insbesondere aber auch ihrer Unempfindlichkeit und Einfachheit stellt die erfindungsgemäße Messanordnung eine besonders vorteilhafte Lösung zur elektrisch entkoppelten Funktionsüberprüfung einer im Betrieb befindlichen Zündspule eines Zündsystemes einer Brennkraftmaschine dar, bei der der elektrische Leiter durch die Zündspule gebildet ist, wobei die Erfindung die Beurteilung des Zündsystemes insgesamt sowie auch dessen primärer und sekundärer Zündungsfunktionen ermöglicht. Durch Vergleiche der Zündspulen des Zündsystems kann das System insgesamt überwacht werden und es können sowohl die Zündspulen, Kontaktierungen und Verbindungsmittel wie auch die Zündkerzen in ihrer Funktionalität beurteilt werden, und zwar in Wechselwirkung zur Verbrennung. So können Zündaussetzer erfasst werden, um gegebenenfalls die Kraftstoffeinspritzung abzuschalten und Katalysatorschäden vorzubeugen.

Als mechanisch-elektrische Wandler können im Rahmen der Erfindung Dehnmessstreifen, piezoresistive Aufnehmer oder auch piezokeramische Aufnehmer bevorzugt Verwendung finden.

Eine besonders zweckmäßige Ausgestaltung des mechanisch-elektrischen Wandlers bildet ein Piezokeramikelement in einer Ausbildung als Klopfsensor, wie er als erprobtes Bauelement zur Verfügung steht und insbesondere auch im Automobilbau schon in Großserie eingesetzt ist, und damit preisgünstig verfügbar ist. Bezogen auf den vorstehend angesprochenen Anwendungsfall der Messanordnung in Verbindung mit Zündspulen kann der mechanisch-elektrische Wandler beispielsweise in der Ausgestaltung als Klopfsensor extern zur Zündspule angeordnet werden oder auch als Bauelement mit der Zündspule zusammengefasst oder in diese integriert sein, wobei sich die direkte mechanische Kopplung über ein im wesentlichen nicht komprimierbares Medium, also bevorzugt eine zumindest nahezu starre Kopplung einfach realisieren lässt.

Da die erfindungsgemäße Messanordnung bezogen auf die geschilderte Verwendung in Verbindung mit Zündsystemen von Brennkraftmaschinen von der Art der verwendeten Zündtechnik unabhängig ist, bietet die Integration des mechanisch-elektrischen Wandlers in Form eines Klopfsensors in die Zündspulen auch beste Voraussetzungen dafür, durch die Signalauswertung im Motorsteuergerät den für die Zünd- und Brennspannung erforderlichen Proportionalitätsfaktor im Motorsteuergerät zu applizieren. Bei Einsatz von energiegesteuerten Zündungsanlagen, die durch besondere Auswertung des Ionenstroms Aussagen über Klopfen, Verbrennungsdruck und/oder auch Verbrennungsaussetzer erlauben, bietet die Messanordnung außerdem die Möglichkeit, potentialfrei einen Bezug zu dem Ionenstrom herzustellen und dadurch die Verbrennungsqualität zu überprüfen und zu beurteilen, womit zusätzliche Informationen für die Steuerung und/oder Regelung der Brennkraftmaschine zur Verfügung stehen.

Eine in diesem Zusammenhang besonders zweckmäßige und weitreichende Aussagen ermöglichende Ausgestaltungsform in Verbindung mit Brennkraftmaschinen von Kraftfahrzeugen besteht darin, der Zündeinheit in Zuordnung zur Zündspule einen mechanisch-elektrischen Wandler in Form eines Klopfsensors zuzuordnen und diesen zusätzlich auch mit der Zündkerze mechanisch zu koppeln, so dass über den Klopfsensor sowohl die Schallsignale der Zündspule potentialfrei über den gesamten Zündungsbereich erfasst werden können, und zwar proportional zur über die Zündspule laufenden elektrischen Leistung, wie auch die Schalldrucksignale der Verbrennung. Eine solche kombinierte Nutzung ist wirtschaftlich besonders günstig und erlaubt zudem Rückschlüsse auf den mechanischen Zustand der Brennkraftmaschine insgesamt bei direkter Erfassung der Verbrennungsabläufe, so dass Verbrennungsaussetzer ebenso wie Frühzündungen (Klopfen) unmittelbar detektiert werden können und dementsprechende Steuermaßnahmen, z.B. Abschalten der Kraftstoffeinspritzung zum Schutz des Katalysators oder Verstellen der Zündung in Richtung spät, eingeleitet werden können.

Am Beispiel einer Zündeinheit mit Zündspule und Zündkerze läßt sich verallgemeinernd veranschaulichen, dass der mechanisch-elektrische Wandler als Schwingungsaufnehmer in durchaus unterschiedlichen Positionen angeordnet werden kann, so beispielsweise zwischen Zündspule und Zündkerze, in der Zündspule, oder auch, bezogen auf die Zündspule, gegenüberliegend zur Zündkerze.

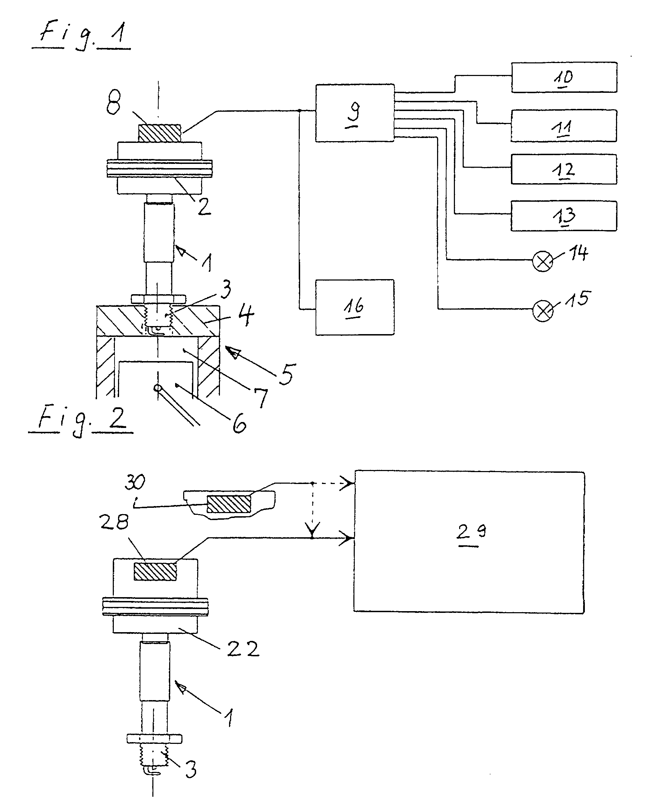

Zur Erfindung hinführende Einzelheiten werden anhand der in den Figuren 1 und 2 dargestellten Messanordnungen erläutert.

Es zeigen:
Figur 1 im Schema eine Messanordnung, bei der das als mechanisch-elektrischer Wandler verwendete Piezokeramikelement der Zündspule eines Zündsystems einer Brennkraftmaschine extern zugeordnet ist,
Figur 2 eine Anordnung ähnlich jener gemäß Figur 1, bei der das als mechanisch-elektrischer Wandler verwendete Piezokeramikelement in integrierter Bauweise mit der Zündspule eines Zündsystems einer Brennkraftmaschine zusammengefasst ist.
   Die Erfindung wird im folgenden anhand von Figur 3 näher erläutert, bei der die Messanordnung in ihrer Anwendung auf ein Zündsystem einer Brennkraftmaschine beispielhaft dargestellt ist.
Figur 3 zeigt in stark schematisierter Darstellung eine Zündkerze einer Brennkraftmaschine mit in einer Baueinheit zugeordneter Zündspule und einem mechanisch-elektrischen Wandler, der mit der Zündspule und der Zündkerze direkt mechanisch gekoppelt ist.

Figuren 1 und 2 zeigen jeweils in schematischer Anordnung ein Zündsystem einer Brennkraftmaschine mit einer Zündkerze 1, die mit einer zugehörigen Einzelfunkenzündspule 2 und ihren Verbindungsmitteln zu einer Baueinheit zusammengefasst ist. Die Zündkerze 1 ist über ihren Gewindeteil 3 in den Zylinderkopf 4 der schematisiert dargestellten Brennkraftmaschine 5 eingeschraubt, deren Kolben 6 den volumenveränderlichen Brennraum 7, auf den die Zündkerze 1 ausmündet, begrenzt. Die weiteren Funktionsteile der Brennkraftmaschine und des Zündsystems sind ebensowenig dargestellt wie die auf den Brennraum 7 der Brennkraftmaschine 5 ausmündenden Gaswechselkanäle und die Gaswechselsteuerelemente.

Der Zündspule 2 ist gemäß Figur 1 zur Erfassung der von der Zündspule 2 als elektrischem Leiter ausgehenden Schwingungen ein mechanisch-elektrischer Wandler in Form eines Piezokeramikelementes 8 zugeordnet, das in der Ausgestaltung gemäß Figur 1 an der Zündspule 2 außenseitig anliegt, also extern in direkter mechanischer Kopplung an dieser befestigt ist.

Als Piezokeramikelement 8 ist ein Klopfsensor verwendet, über den die Schallsignale der Zündspule 2 als Schwingungen erfasst und einem Verstärker 9 einer Auswerteeinheit mit oder ohne Filter zugeführt werden, die hier symbolisch mit dem Verstärker 9 zusammengefasst ist. Nachgeordnet zum Verstärker 9 der Auswerteeinheit mit oder ohne Filter sind der Messanordnung, die eine elektrisch entkoppelte Funktionsüberprüfung des Zündsystems während des Betriebes der Brennkraftmaschine ermöglicht, visuelle, im Ausführungsbeispiel digitale Anzeigen, die hier symbolisch dargestellt und mit 10 bis 15 bezeichnet sind, wobei die Anzeige 10 beispielsweise die Schließzeit angibt, die Anzeige 11 die Brenndauer, die Anzeige 12 die Zündspannung, die Anzeige 13 die Brennspannung und wobei 14 und 15 Anzeigen in Form von Kontrolleuchten symbolisieren, von denen die Anzeige 14 beispielsweise wiedergibt, ob der Zündfunke in Ordnung ist und die Anzeige 15 auf Fehler in der Zündung hinweist. Nicht weiter bezeichnet sind die in der Verbindung vom Piezokeramikelement 8 zu den einzelnen Elementen der Messanordnung führenden Leitungswege.

Ferner veranschaulicht Figur 1, dass parallel - oder auch anstelle der vorgeschilderten Anzeige von Funktionsdaten - eine analoge Auswertung möglich ist, beispielsweise durch Betrachtung mit einem Sichtgerät (Oszilloskop) 16, das im einfachsten Fall mit dem Piezokeramikelement 8, oder auch, was hier nicht gezeigt ist, mit dem Verstärker 9 verbunden ist. Das Sichtgerät 16 ermöglicht beispielsweise Aussagen über den Funktionszustand des Zündsystems. Die entsprechenden Signale - potentialfrei über den gesamten Zündbereich erfassbar - sind der über die Zündspule 2 laufenden elektrischen Leistung proportional. Die Korrelation der Spannungslage am Sekundärkreis der Zündspule 2 und der Spannungslage am Piezokeramikelement 8 ist zeit- und phasenmäßig identisch und amplitudenmäßig proportional, derart, dass der über die Schwingungen am Piezokeramikelement 8 erfasste mechanische Energieverlauf mit der über die Zündspule 2 laufenden elektrischen Leistung vergleichbar ist. Bezogen auf ein Zündsystem mit einer Mehrfachanordnung von Zündkerzen 1, gegebenenfalls in Verbindung mit einer mehrzylindrigen Brennkraftmaschine, sind durch die Aufnahme der über die Zündspule 2 laufenden elektrischen Leistung mittels des Piezokeramikelementes 8 als mechanisch-elektrischem Wandler Rückschlüsse auf die primäre und sekundäre Zündungsfunktion möglich, und es können auch Auswertungen erfolgen, die ausgehend vom Vergleich der Zündspulen untereinander Auswirkungen auf das gesamte Zündsystem zeigen.

Figur 2 zeigt eine der Figur 1 im Grundaufbau weitgehend entsprechende Anordnung. Abweichend von Figur 1, zu der, soweit übereinstimmend, gleiche Bezugszeichen verwendet sind, ist hier allerdings in die Einzelfunkenzündspule 22 das Piezokeramikelement 28 als mechanisch-elektrischer Wandler in Form eines Klopfsensors integriert. Die über das Piezokeramikelement 28 erfassten Schwingungen werden im weiteren der Steuerung 29 der Brennkraftmaschine 5 zugeführt, in der eine direkte Zündungsdiagnose mit Umsetzung in entsprechende Steuer- und/oder Regelwerte für die Brennkraftmaschine vorgenommen wird. Der für Zünd- und Brennspannung erforderliche Proportionalitätsfaktor ist dabei durch die Auswertung im Steuerund/oder Regelgerät applizierbar.

In Figur 2 ist durch die teilweise Darstellung einer weiteren Einzelfunkenzündspule 30 zusätzlich veranschaulicht, dass die Signale, die an den den Zylindern einer mehrzylindrigen Brennkraftmaschine zugeordneten Zündkerzen vorgesehenen Zündspulen erfasst werden, jeweils dem Steuergerät der Brennkraftmaschine gesondert zugeführt werden können, oder zusammengefasst als Summensignal, aus dem sich über entsprechende Beobachtungsfenster jeweils interessierende Werte herausgreifen lassen.

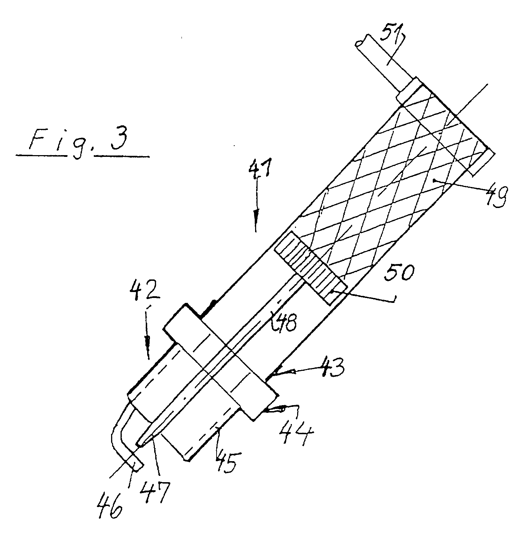

In Figur 3 ist eine Zündeinheit 41 gezeigt, die baulich zusammengefasst eine Zündkerze 42 und eine Zündspule 49 umfasst, wobei das Gehäuse 43 der Zündeinheit anschließend an den Mutternteil 44 der Zündkerze 42 in herkömmlicher Weise einen Gewindeteil 45 aufweist, an dem die Masseelektrode 46 der Zündkerze 42 angebracht ist. Der Masseelektrode 46 gegenüberliegend ist die Mittelelektrode 47 vorgesehen, die in nicht näher dargestellter Weise gegenüber dem Kerzengehäuse isoliert ist, dieses durchsetzt und mit einem Anschlussbolzen 48 bevorzugt leitend verbunden ist. Der Anschlussbolzen 48 ist bei der erfindungsgemäßen Kombination der Zündkerze 42 mit der Zündspule 49 zu einer Zündeinheit 1 gegen das Piezokeramikelement 50 als mechanisch-elektrischen Wandler mechanisch axial abgestützt, also direkt mechanisch gekoppelt. Das Piezokeramikelement 50 liegt dabei im Übergang zur Zündspule 49 und ist mit dieser ebenfalls direkt mechanisch gekoppelt. Am von der Zündkerze 42 abgelegenen Ende der Zündspule 49 ist symbolisch ein Anschluss 51 für nicht weiter dargestellte Leitungsverbindungen vorgesehen.

Zur Funktion des Piezokeramikelementes 50 als mechanisch- elektrischer Wandler im Zusammenwirken mit der Zündspule 49 wird auf die voraufgehenden Ausführungen Bezug genommen. Zusätzlich ist das Piezokeramikelement 50 in der vorgesehenen Anordnung über den Anschlussbolzen 48 mechanisch über die Zündkerze 42 mit dem Brennraum verbunden, wobei die Verbindung des Piezokeramikelementes 50 mit der Mittelelektrode 47 bzw. dem diese umschließenden Isolationskörper erfolgt, so dass der Brennraumdruck unmittelbar mechanisch über die Zündkerze 42 auf das Piezokeramikelement 50 übertragen wird, das ein entsprechendes, zum Brennraumdruck proportionales Schalldrucksignal liefert.

Durch die Anordnung der Elektrode und deren Ausgestaltung lässt sich auch Einfluss auf die Intensität nehmen, mit der die Druckwelle den Schwingungsaufnehmer, also des Piezokeramikelement 50 beaufschlagt (Dämpfungseffekt).

Es können somit durch die Erfindung ergänzend zu den Rückschlüssen auf die primäre und sekundäre Zündungsfunktion, die aus den Schallsignalen der Zündkerze 49 abgeleitet werden, durch die unmittelbare Erfassung des Brennraumdruckes zusätzliche Informationen über den mechanischen Zustand der Brennkraftmaschine gewonnen werden, wobei über den Verbrennungsdruck direkt auch Klopfzustände und Verbrennungsaussetzer erfasst werden können.

Die erfindungsgemäß ausgestattete Zündeinheit 41 gemäß Figur 3 erlaubt damit in sehr weitgehendem Umfang Rückschlüsse auf Verbrennungsabläufe und den mechanischen Zustand der Brennkraftmaschine mit entsprechenden Steuerungsmöglichkeiten sowie auch zusätzliche Möglichkeiten für die Diagnose des Brennkraftmaschinenzustandes.

Die direkte mechanische Kopplung des elektrischen Leiters, der im Ausführungsbeispiel gemäß Figur 3 durch die Zündspule 49 beispielsweise gebildet ist, mit dem mechanisch-elektrischen Wandler, im Ausführungsbeispiel gemäß Figur 3 dem Piezokeramikelement 50, erfolgt erfindungsgemäß über ein im wesentlichen nicht komprimierbares Medium, wobei das nicht komprimierbare Medium im Ausführungsbeispiel durch einen Festkörper gebildet ist, da ein unmittelbarer Anschluss vorgesehen ist, aber erfindungsgemäß auch über eine Flüssigkeit gebildet sein kann, die, im Gegensatz zu Gasen, entsprechende Verhaltensweisen zeigt.

In den Figuren 1 bis 3 sind als mechanisch-elektrische Wandler stets Piezokeramikelemente dargestellt. Auch wenn solche insbesondere in der Ausgestaltung als Klopfsensoren im Rahmen der Erfindung besonders vorteilhaft und zweckmäßig sind, sind, abweichend von Klopfsensoren, im Rahmen der Erfindung auch andere piezoresistive oder piezokeramische Aufnehmer oder Dehnmessstreifen als mechanisch-elektrische Wandler einsetzbar.

Bezogen auf Figur 3 kann durch die Lage des mechanisch-elektrischen Wandlers in Form des Piezokeramikelementes 50 und/oder dessen Verbindung zum Brennraum auch auf die Intensität der vom Brennraum ausgehenden Druckwellen in ihrer Wirkung auf den mechanisch-elektrischen Wandler Einfluss genommen werden. Unter anderem unter diesem Aspekt kann in Weiterbildung der Erfindung der Wandler in Form des Piezokeramikelementes zwischen Zündkerze und Zündspule, in der Zündspule oder auch auf der von der Zündkerze abgewandten Seite der Zündspule angeordnet sein. Ferner kann in Weiterbildung der Erfindung der mechanisch-elektrische Wandler auch in den Anschlussbolzen integriert sein oder ein Teil desselben bilden. Von Vorteil ist in Ausgestaltung der Erfindung desweiteren eine vorgespannte Verbindung zwischen Anschlussbolzen und mechanisch-elektrischem Wandler, um stets eine positiv belastete Verbindung sicherzustellen. Ferner kann in Weiterbildung der Erfindung die brennraumseitige Erfassung der Druckwellen gedämpft erfolgen, sei es dadurch, dass der Druckwellenaufnehmer in Form beispielsweise der Mittelelektrode 47 durch die Masseelektrode 46 abgeschirmt wird, oder dass dem Anschlussbolzen als Druckwellen aufnehmendes und/oder übertragendes Element ein Dämpfungsglied zugeordnet wird.

## Patentansprüche

1. Messanordnung zur Funktionsüberprüfung von im Betrieb befindlichen Systemen, die einen stromdurchflossenen Leiter (2) umfassen, bei der dem stromdurchflossenen Leiter (2) des im Betrieb befindlichen Systemes in direkter, mechanischer Kopplung über ein im wesentlichen nicht komprimierbares Medium ein mechanisch-elektrischer Wandler (8, 28, 50) zugeordnet ist, der von dem Leiter (2) ausgehende Schwingungen elektrisch entkoppelt erfasst, und bei der die erfassten Schwingungen über einen Verstärker (9) einer Auswerteeinheit zugeführt werden,
**dadurch gekennzeichnet,**
**dass** der stromdurchflossene Leiter (2) durch die Zündspule (49) eines Zündsystems einer Brennkraftmaschine gebildet ist, und dass die Zündspule mit einer Zündkerze (42) zu einer Zündeinheit (41) als Baueinheit zusammengefasst ist, bei der der mit der Zündspule (49) verbundene mechanisch-elektrische Wandler (50) mit einem dem Brennraum der Brennkraftmaschine zugeordneten Teil der Zündkerze (42) als Aufnehmer für den Brennraumdruck in direkter mechanischer Kopplung zusätzlich gekoppelt ist.

2. Messanordnung nach Anspruch 1,
**dadurch gekennzeichnet,**
**dass** das als Aufnehmer für den Brennraumdruck dienende Teil der Zündkerze (42) durch die gegenüber dem Kerzengehäuse isolierte Elektrode (47) der Zündkerze (42) gebildet ist, wobei die Elektrode (47) gegen den mechanisch-elektrischen Wandler (50) abgestützt ist.

3. Messanordnung nach Anspruch 2,
**dadurch gekennzeichnet,**
**dass** die gegenüber dem Kerzengehäuse (43) isolierte Elektrode (47) über einen Anschlussbolzen (48) gegen den mechanisch-elektrischen Wandler (50) abgestützt ist.

4. Messanordnung nach einem der vorhergehenden Ansprüche,
**dadurch gekennzeichnet,**
**dass** zumindest eine Auswerteeinheit Anzeigeinstrumenten (10 bis 15) vorgeschaltet ist.

5. Messanordnung nach einem der vorhergehenden Ansprüche,
**dadurch gekennzeichnet,**
**dass** zumindest eine Auswerteeinheit der Steuerung (29) der Brennkraftmaschine (5) zugeordnet ist, derart, dass über die Auswerteeinheit mit Filter verarbeitete Signale der Messanordnung in Steuersignale für die Brennkraftmaschine umsetzbar sind.

6. Messanordnung nach einem der Ansprüche 1 bis 4,
**dadurch gekennzeichnet,**
**dass** zumindest eine Auswerteeinheit der Steuerung (29) der Brennkraftmaschine (5) zugeordnet ist, derart, dass über die Auswerteeinheit ohne Filter verarbeitete Signale der Messanordnung in Steuersignale für die Brennkraftmaschine umsetzbar sind.

7. Messanordnung nach einem der vorhergehenden Ansprüche,
**dadurch gekennzeichnet,**
**dass** der mechanisch-elektrische Wandler durch ein Dehnmessstreifensystem gebildet ist.

8. Messanordnung nach einem der Ansprüche 1 bis 6,
**dadurch gekennzeichnet,**
**dass** der mechanisch-elektrische Wandler durch ein Piezokeramikelement (8, 28, 50) gebildet ist.

9. Messanordnung nach Anspruch 8,
**dadurch gekennzeichnet,**
**dass** das Piezokeramikelement (8, 28, 50) ein Klopfsensor ist.

## Claims

1. Measurement arrangement for the functional monitoring of operating systems that comprise a current-carrying conductor (2), in which a mechanical-electrical converter (8, 28, 50) is associated with the current-carrying conductor (2) of the system in operation by direct mechanical coupling via an essentially incompressible medium, which detects oscillations originating in the conductor (2) without electrical coupling and in which the oscillations detected are passed via an amplifier (9) to an evaluation unit,
**characterised in that**
the current-carrying conductor (2) is formed by the ignition coil (49) of an ignition system of an internal combustion engine and the ignition coil is combined with a spark plug (42) into an ignition unit (41) constituting a structural element, in which the mechanical-electrical converter (50) connected with the ignition coil (49) is additionally coupled by direct mechanical means with a part of the spark plug (42) associated with the combustion chamber of the combustion engine as a pickup for the pressure in the combustion chamber.

2. Measurement arrangement according to Claim 1,
**characterised in that**
the part of the spark plug (42) that serves as the pickup for the combustion chamber pressure is formed by the electrode (47) of the spark plug that is insulated from the spark plug body, and the electrode (47) is supported against the mechanical-electrical converter (50).

3. Measurement arrangement according to Claim 2,
**characterised in that**
the electrode (47) insulated from the spark plug body is supported against the mechanical-electrical converter (50) via a connection bolt (48).

4. Measurement arrangement according to any of the preceding claims,
**characterised in that**
at least one evaluation unit is connected ahead of display instruments (10 to 15).

5. Measurement arrangement according to any of the preceding claims,
**characterised in that**
at least one evaluation unit is associated with the control system (29) of the combustion engine (5), in such manner that by virtue of the evaluation unit, signals from the measurement arrangement processed by a filter can be converted into control signals for the combustion engine.

6. Measurement arrangement according to any of Claims 1 to 4,
**characterised in that**
at least one evaluation unit is associated with the control system (29) of the combustion engine (5), in such manner that by virtue of the evaluation unit, signals from the measurement arrangement processed without a filter can be converted into control signals for the combustion engine.

7. Measurement arrangement according to any of the preceding claims,
**characterised in that**
the mechanical-electrical converter is formed by a strain gauge system.

8. Measurement arrangement according to any of Claims 1 to 6,
**characterised in that**
the mechanical-electrical converter is formed by a piezoceramic element (8,28,50).

9. Measurement arrangement according to Claim 8,
**characterised in that**
the piezoceramic element (8, 28, 50) is an engine knock sensor.

## Revendications

1. Dispositif de mesure pour contrôler le fonctionnement de systèmes en marche qui comprennent un conducteur (2) traversé par un courant, dans lequel un convertisseur mécanique/électrique (8, 28, 50) est associé au conducteur (2), traversé par le courant du système en marche, par couplage mécanique direct via un fluide sensiblement non compressible, ledit convertisseur détectant de façon électriquement découplée les oscillations émanant du conducteur (2), et dans lequel les oscillations détectées sont amenées à une unité d'évaluation via un amplificateur (9), **caractérisé en ce que** le conducteur (2) traversé par le courant est formé par la bobine d'allumage (49) d'un système d'allumage d'un moteur à combustion interne, et **en ce que** la bobine d'allumage est regroupée avec une bougie d'allumage (42) pour former une unité d'allumage (41) à titre d'unité structurelle dans laquelle le convertisseur mécanique/électrique (50) connecté à la bobine d'allumage (49) est couplé par couplage mécanique direct en supplément à une partie de la bougie d'allumage (42), associée à la chambre de combustion du moteur à combustion interne, en tant que récepteur pour la pression de la chambre de combustion.

2. Dispositif de mesure selon la revendication 1, **caractérisé en ce que** la partie de la bougie d'allumage (42), servant de récepteur pour la pression de la chambre de combustion est formée par l'électrode (47), isolée vis-à-vis de l'enveloppe de bougie, de la bougie d'allumage (42), l'électrode (47) étant en appui contre le convertisseur mécanique/électrique (50).

3. Dispositif de mesure selon la revendication 2, **caractérisé en ce que** l'électrode (47) isolée vis-à-vis de l'enveloppe de bougie (43) est en appui contre le convertisseur mécanique/électrique (50) via un plot de raccordement (48).

4. Dispositif de mesure selon l'une quelconque des revendications précédentes, **caractérisé en ce qu'**au moins une unité d'évaluation est agencée en amont d'instruments d'affichage (10 à 15).

5. Dispositif de mesure selon l'une quelconque des revendications précédentes, **caractérisé en ce qu'**au moins une unité d'évaluation est associée à la commande (29) du moteur à combustion interne (5), de telle sorte que des signaux du dispositif de mesure traités via l'unité d'évaluation avec un filtre peuvent être convertis en signaux de commande pour le moteur à combustion interne.

6. Dispositif de mesure selon l'une quelconque des revendications 1 à 4, **caractérisé en ce qu'**au moins une unité d'évaluation est associée à la commande (29) du moteur à combustion interne (5), de telle sorte que des signaux du dispositif de mesure traités via l'unité d'évaluation sans filtre peuvent être convertis en signaux de commande pour le moteur à combustion interne.

7. Dispositif de mesure selon l'une quelconque des revendications précédentes, **caractérisé en ce que** le convertisseur mécanique/électrique est formé par un système à jauges de contrainte.

8. Dispositif de mesure selon l'une quelconque des revendications 1 à 6, **caractérisé en ce que** le convertisseur mécanique/électrique est formé par un élément piézo-céramique (8, 28, 50).

9. Dispositif de mesure selon la revendication 8, **caractérisé en ce que** l'élément piézo-céramique (8, 28, 50) est un détecteur de cognements.
